Europäisches Patentamt

European Patent Office

Office européen des brevets

(11) Numéro de publication: **0 128 815**
**A2**

(12) # DEMANDE DE BREVET EUROPEEN

(21) Numéro de dépôt: **84401138.7**

(22) Date de dépôt: **05.06.84**

(51) Int. Cl.³: **G 02 B 27/10**

---

(30) Priorité: **08.06.83 FR 8309501**

(71) Demandeur: **R.E.O.S.C. (RECHERCHES ET ETUDES D'OPTIQUE ET DE SCIENCES CONNEXES), 10, rue des Ecoles, Ballainvilliers F-91160 Longjumeau (FR)**

(43) Date de publication de la demande: **19.12.84 Bulletin 84/51**

(72) Inventeur: **Espiard, Jean, 16, rue Corbon, F-75015 Paris (FR)**
Inventeur: **Geyl, Roland, 5, rue Henri Thirard, F-94240 L'Hay les Roses (FR)**

(84) Etats contractants désignés: **DE GB**

(74) Mandataire: **Schrimpf, Robert et al, Cabinet Regimbeau 26, Avenue Kléber, F-75116 Paris (FR)**

---

(54) **Dispositif d'observation optique à deux champs.**

(57) L'invention concerne un dispositif d'observation optique à deux champs d'observation.

Le dispositif comporte un télescope à deux miroirs (1, 2) et un objectif associé, le miroir secondaire (2) du télescope constituant un dioptre de l'objectif (3).

L'invention s'applique notamment au guidage des missiles.

EP 0 128 815 A2

I

## DISPOSITIF D'OBSERVATION OPTIQUE A DEUX CHAMPS

L'invention concerne un dispositif d'observation optique à deux champs et elle sera expliquée en référence à une application particulière, utile pour la compréhension de l'invention mais qui ne limite pas l'invention à cette application.

Pour résoudre des problèmes concernant le guidage de missiles, il est utile de pouvoir observer un grand champ au départ du missile, de façon notamment à acquérir facilement ce dernier, et ensuite un petit champ, pour le guidage du missile sur la cible.

On connaît déjà un dispositif d'observation à deux champs, comme décrit par exemple dans le brevet américain 4 354 742, ce dispositif comprenant un télescope à deux miroirs auquel est associé un objectif. Le miroir secondaire du télescope est escamotable en sorte que pour l'observation à grand champ le miroir secondaire est escamoté et l'observation se fait au moyen de l'objectif tandis que pour l'observation à petit champ, le miroir secondaire est en service et l'observation se fait au moyen du télescope.

Ce dispositif nécessite donc un déplacement du miroir secondaire et il ne permet pas l'observation simultanée au moyen du télescope et au moyen de l'objectif.

La présente invention vise à fournir un dispositif à deux champs qui comporte lui aussi un télescope à deux miroirs et un objectif mais qui ne nécessite pas un déplacement du miroir secondaire et qui permette, si on le désire, une observation simultanée de l'image fournie par le télescope et de l'image fournie par l'objectif.

On y parvient, selon la présente invention, par le fait que le miroir secondaire du télescope constitue un dioptre de l'objectif.

2

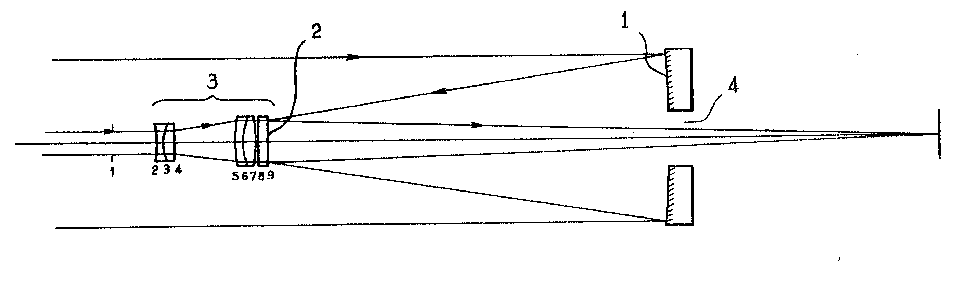

On décrira ci-après un exemple de réalisation d'un dispositif selon l'invention, en référence à la figure unique du dessin joint qui est un schéma optique du dispositif.

Le dispositif représenté est essentiellement constitué par un télescope à deux miroirs 1,2 et un objectif 3.

Dans cet exemple, le télescope est une combinaison Cassegrain et, plus précisément, un télescope Ritchey Chrétien. Le grand miroir ou miroir principal 1 est un miroir concave percé en son centre d'une ouverture 4 et le petit miroir ou miroir secondaire 2 du télescope est un miroir convexe.

Ces formes de miroir ne sont pas limitatives et il n'est pas non obligatoire que le miroir principal soit percé, l'observation pouvant se faire suivant une direction autre que la direction d'incidence.

L'objectif 3 comporte plusieurs lentilles et, selon l'invention, le miroir secondaire 2 du télescope fait partie de la combinaison optique de l'objectif.

Le traitement réfléchissant de ce miroir secondaire est semi-réfléchissant ou comporte une couche séparatrice de longueur d'onde.

Dans le cas du guidage d'un missile, un traitement semi-réfléchissant convient, par exemple un traitement qui assure 20% de transmission et 80% de réflexion, car au démarrage du missile, ce dernier émet beaucoup d'énergie en sorte que les 20% de transmission suffisent pour l'observation.

En variante, le miroir secondaire comporte une couche séparatrice qui assure, par exemple, une réflexion à 90% dans la bande de longueur d'onde 8-13 microns et une transmission à 80% dans le spectre visible, dans le cas d'un viseur multispectral à pupille unique.

La combinaison dioptrique à laquelle est intégré le miroir secondaire a une focale plus courte que la combinaison Cassegrain afin de fournir un champ plus grand. La position du foyer dioptrique peut être rejetée soit au niveau du foyer Cassegrain, soit au-delà en utilisant une combinaison télé-objectif inversé.

On donnera ci-après les paramètres d'un exemple pratique :

Télescope

Miroir concave 1 : rayon 358,81 mm,coefficient d'asphérisation k =-1,02643
Diamètre utile : 55 mm

Miroir convexe 2 : rayon 111,85 mm,coefficient d'asphérisation k =-2,45
Diamètre utile : 15 mm

Distance entre miroirs : 134,63 mm

Position du foyer Cassegrain : 90 mm en arrière du sommet du miroir concave

Longueur focale résultante : 900 mm

Champ linéaire : 16 mm de diamètre

Objectif central

Les données de l'objectif sont les suivantes, les numéros des dioptres renvoient à la figure générale ci-jointe, le dioptre n° 31 étant la pupille d'entrée. L'unité de longueur choisie est le mm et le système est calculé pour le domaine spectral 750-1100 nanomètres.

4

| Nb | RAYON | DISTANCE | INDICE | NU | VERRE |
|---|---|---|---|---|---|
| 31 | 0,00 | -14,60 | 1,0 | | |
| 32 | -25,50 | 2,04 | 1,59493 | 102,15 | CO464 |
| 33 | 13,35 | 3,04 | 1,73887 | 53,85 | D 6227 |
| 34 | 29,69 | 19,99 | 1,0 | | |
| 35 | 42,97 | 2,57 | 1,73887 | 53,85 | D 6227 |
| 36 | 18,27 | 4,49 | 1,59493 | 102,15 | CO464 |
| 37 | -39,38 | 1,04 | 1,0 | | |
| 38 | -134,42 | 3,07 | 1,50917 | 90,25 | B 1664 |
| 39 | -111,85 | 222,72 | 1,0 | | |

$k = -2,4502$

FOCALE $= 118,31$

OUVERTURE $= F/\ 16,13$

CHAMP $= +/-\ 3,81$ DEGRE(S)

Le dioptre 39 de l'objectif est confondu avec le miroir secondaire 2 du télescope.

Un dispositif selon l'invention présente l'intérêt que tout transite systématiquement par une pupille unique. En principe, la vision des deux champs est simultanée mais on peut rendre les visions successives en masquant l'une des pupilles.

L'invention n'est pas limitée à cet exemple de réalisation.

## REVENDICATIONS

1. Dispositif d'observation optique à deux champs d'observation, comportant un télescope à deux miroirs et un objectif associé, caractérisé en ce que le miroir secondaire (2) du télescope est un dioptre de l'objectif (3).

2. Dispositif selon la revendication 1, caractérisé en ce que le miroir secondaire (2) est un miroir semi-réfléchissant.

3. Dispositif selon la revendication 1, caractérisé en ce que le miroir secondaire (2) comporte une couche séparatrice de longueur d'onde.

4. Dispositif selon l'une des revendications 1 à 3, caractérisé en ce que le miroir secondaire est un miroir convexe, de façon en soi connue.

5. Dispositif selon l'une des revendications 1 à 4, caractérisé en ce que le miroir principal(1) du télescope comporte une ouverture centrale pour permettre l'observation à travers le miroir, de façon en soi connue.